# EUROPEAN PATENT SPECIFICATION

(11) **EP 3 767 113 B1**
(45) Date of publication and mention of the grant of the patent: **24.05.2023**
(21) Application number: 19186874.4
(22) Date of filing: 17.07.2019
(51) Int. Cl.: F16B 5/06, F16B 21/07, F16B 21/04

(54) **CLIP ASSEMBLY**
KLAMMERANORDNUNG
ENSEMBLE DE PINCES

(43) Date of publication of application: 20.01.2021
(73) Proprietor: Illinois Tool Works Inc., Glenview, IL 60025 (US)
(72) Inventor: SAVI, Massimo, 412 51 Göteborg (SE); HANSON, Niklas, 412 51 Göteborg (SE)
(74) Representative: HGF

(56) References cited:
- WO-A1-2010/066404
- WO-A1-2018/175031
- DE-A1-102008 052 965
- US-A- 2 942 905
- US-A1- 2013 174 389

## Description

The present invention relates to the general field of fasteners and mechanical connectors, and in particular, but not exclusively, to an improved clip assembly for adjustably and demountably coupling a first component and a second component.

### Introduction

Traditionally, during a manufacturing process of, for example, vehicles, various components are connected to one another. For example, doors are connected to a main vehicle frame, tail lights are secured to the vehicle frame, and the like. Many vehicles are designed and styled distinctly from other vehicles. Accordingly, the distinct vehicle styles and geometries often require customized fastening assemblies at various locations.

Document WO2018/175031 entitled *"Linearly-adjustable clip assembly"* discloses a clip assembly for coupling/fastening two components and which is configured to allow linear adjustment of the coupled components (i.e. relative movement between the coupled component). This particular clip assembly has, *inter alia,* a rail member formed of a rail beam with a bevelled, or inwardly stepped rectangular edge, and an attachment member configured to mountably accept and retain the rail member. In use (i.e. during the coupling or decoupling process, or when coupled), the clip assembly may be subject to substantial forces, such as, for example, the decoupling force required when pulling the two attached components apart until the two components are detached from one another, or, the coupling force required when pushing the two components into engagement until the two components are coupled. Preferably, the decoupling force is relatively high so as to minimise the risk of unintentional decoupling and the coupling force is relatively low so as to minimise the user effort, as well as, recurring stresses (wear and tear) to the movable components of the clip assembly.

Moreover, a relatively low coupling force may reduce the connection time, thus minimising overall manufacturing costs of the vehicle. Clip assemblies with relatively high coupling force may inevitably cause damage to the rail member and/or the attachment member. Also, it is easy to unintentionally misalign the rail member in relation to the attachment member during engagement, increasing the risk of further damage. For example, the rail member may be inserted at an angle relative to the normal axis of the assembly. Any misalignment (i.e. the coupling components are angled with regards to each other) may result in an insufficient connection or in overbending or damage of relevant parts of the attachment member.

Subsequent replacement of damaged parts or of the whole clip assembly can be a time-consuming process, as well as, incur costs.

Another clip assembly is known from US 2013/174389 A1.

Consequently, it is desirable to provide an improved clip assembly adapted to eliminate or mitigate at least some of the above problems.

### Summary of the Invention

According to a first aspect of the present invention, there is provided a clip assembly for adjustably coupling a first component and a second component, said clip assembly comprising:
a rail member, configured to connect to the first component, comprising a rail beam having a rail ledge at a distal end portion, said rail ledge having a substantially arrow-shaped cross-section, and
an attachment member, configured to connect to the second component, comprising at least two opposed elastically deflectable coupling brackets provided at a base portion and adapted to mountably receive and slidably retain said rail ledge so as to allow linear movement of said rail member relative to said attachment member along a longitudinal axis of said rail ledge.

The arrow-shaped rail ledge and corresponding coupling bracket provides the advantage of significantly improved ease of use when coupling the rail member and attachment member of the clip assembly, but also, when decoupling the rail member from the attachment member. In particular, the arrow-shaped rail ledge and corresponding coupling brackets (attachment member) provide for a significant difference between the required coupling force and the decoupling force, i.e. the decoupling force is significantly greater than the coupling force, therefore, providing an improved user experience wen inserting the rail ember into the attachment member, but ensuring a secure attachment between the rail member and the attachment member when coupled. Furthermore, the arrow-shaped profile of the rail ledge and corresponding coupling brackets allows for a maximum margin of alignment error during coupling engagement, i.e. the coupling brackets arrow-shaped profile will "funnel" the rail ledge into correct engagement with the coupling brackets, even if the rail member and attachment member are not perfectly aligned (i.e. they are angled with regards to each other) during coupling.

Advantageously, said at least two coupling brackets may be spaced apart by a central gap portion.

Advantageously, said rail beam may comprise at least two end walls connected to respective ends of said rail ledge. Preferably, said end walls may comprise stop barriers configured to limit the linear movement of said rail member relative to said attachment member. This provides the advantage of preventing any unintentional decoupling by sliding the rail member out of engagement with the attachment member.

Advantageously, said arrow-shaped cross section may comprise a distal apex at a centre axis of said rail ledge, a first and second lateral side wall portion extending from said distal apex and a first and second shoulder portion extending from respective one of said first and second side wall portion towards said centre axis of said rail ledge. Preferably, each one of said first and second side wall portion may have a convex curvature. Even more preferably, the angle between said first and second shoulder portion and said centre axis of said rail ledge may be obtuse. Yet, even more preferably, the angle between said first and second shoulder portion and said centre axis of said rail ledge may be greater than 100 degrees. Yet, even more preferably, the angle between said first and second shoulder portion and said centre axis of said rail ledge may be equal to or greater than 110 degrees.

Advantageously, said central gap portion may be shaped operably complementary to said arrow-shaped cross section of said rail ledge.

According to the invention, said attachment member further comprises a first and second limiter member extending laterally away from an end portion of respective one of said at least two opposed elastically deflectable coupling brackets and towards said base portion. Preferably, each one of said first and second limiter member may be adapted to restrict lateral movement of respective one of said at least two opposed elastically deflectable coupling brackets. Even more preferably, each one of said first and second limiter member may be configured to stoppingly engage with said base portion of said attachment member. Yet, even more preferably, each one of said first and second limiter member may be resiliently spaced apart from said end portion of respective one of said at least two opposed elastically deflectable coupling brackets.

This provides the advantage of protecting the coupling brackets from potential damage during coupling or decoupling action, i.e. by limiting the degree of movement so as to prevent overbending. Further, the limiter members may protect the attachment member from potential damage when unintentionally knocking any one of the coupling brackets, e.g. during transport or when installed but not coupled to the other component, i.e. the resilient limiter members may act as "buffer" to the coupling brackets absorbing any energy when bumped or hit.

Advantageously, a decoupling force required to extract said rail ledge out of engagement with said at least two opposed elastically deflectable coupling brackets may be greater than a coupling force required to insert said rail ledge into engagement with said at least two opposed elastically deflectable coupling brackets. Preferably, said decoupling force may be approximately three times said coupling force.

Advantageously, said at least two opposed elastically deflectable coupling brackets may be provided on a coupling member that is demountably couplable with said attachment member. Preferably, said coupling member may comprise one of a male or female portion and said attachment member comprises respective other one of a male or female portion of a bayonet-type mount.

This provides the advantage that any damaged coupling member, e.g. damaged or worn coupling brackets, may simply be replaced by a new coupling member, therefore minimising costs for repair or replacement.

### Brief Description of the Drawings

Example embodiments of the invention will now be described, by way of example only, with reference to the accompanying drawings, in which:
**Figure 1** is a simplified perspective illustrations of an embodiment of the clip assembly of the present invention where **(a)** the rail member is decoupled from the attachment member and **(b)** the rail member is coupled to the attachment member;
**Figure 2** is a cross-sectional view of **(a)** the rail member and **(b)** the coupling member of the attachment member, including advantageous angles of the rail member shoulder and the corresponding coupling brackets;
**Figure 3** shows an illustration of the coupling member of the attachment member (i.e. decoupled from the attachment member), **(a)** front-view, **(b)** side-view, and **(c)** top-view;
**Figure 4** is a perspective illustration of the coupling member when removed from the attachment member (a) top-side view and (b) bottom-side view to show the bayonet male portion, and
**Figure 5** is a simplified perspective illustration of the rail member/ coupling bracket portion of the clip assembly **(a)** during aligned insertion, **(b)** misaligned when in coupling engagement and **(c)** aligned when in coupling engagement;
**Figure 6** is a simplified front view illustration of the rail member / coupling bracket portion of the clip assembly **(a)** during misaligned coupling attempt pushing against coupling bracket, **(b)** during misaligned coupling attempt when "funnelled" into coupling engagement and **(c)** during aligned coupling attempt;
**Figure 7** is a perspective schematic illustration of an alternative clip assembly (rail member and coupling member shown only) illustrating the linear adjustability between the coupled rail member and the attachment member.

### Detailed description of the preferred embodiment(s)

The described example embodiment relates to a fastening clip suitable for securing two components. The embodiment(s) of the invention are normally applied in vehicles. Although the invention is described with respect to vehicles, the invention is not restricted to vehicles altogether, but may also be used in other structures requiring attachment of accessories or peripheral components to a structure.

Certain terminology is used in the following description for convenience only and is not limiting. The words *'right', 'left', 'lower', 'upper', 'front', 'rear', 'upward', 'down'* and '*downward*'designate directions in the drawings to which reference is made and are with respect to the described component when assembled and mounted. The words *'inner', 'inwardly'* and '*outer', 'outwardly'* refer to directions toward and away from, respectively, a designated centreline or a geometric centre of an element being described (e.g. central axis), the particular meaning being readily apparent from the context of the description.

Further, as used herein, the terms *'connected', 'attached', 'coupled', 'mounted'* are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, *"first", "second", "third"* etc. merely indicate that different instances of like objects are being referred to and are not intended to imply that the objects so described must be in a given sequence, either temporally, spatially, in ranking or in any other manner.

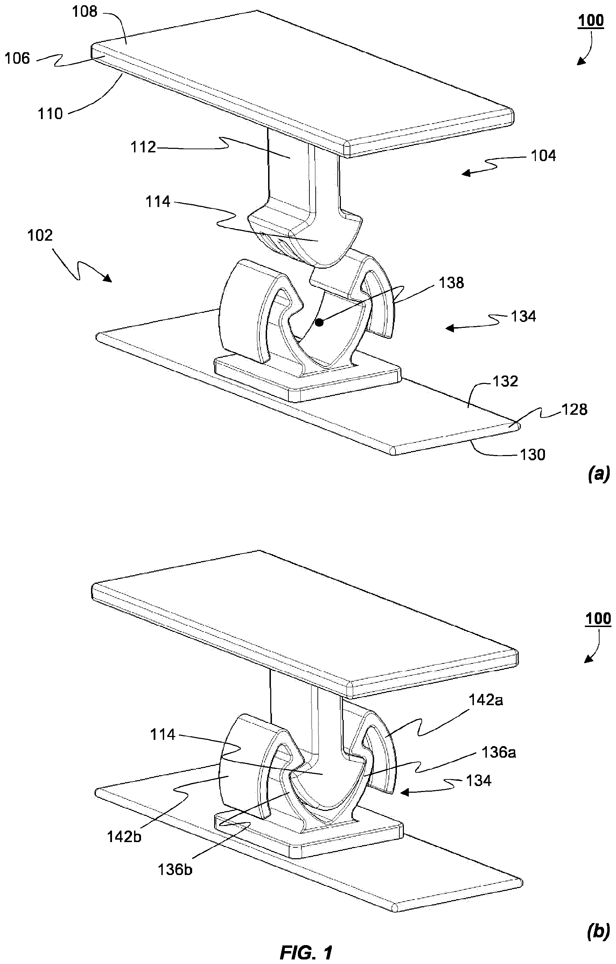

Referring now to Figures 1 to 7, embodiments of the present disclosure provide a clip assembly 100 that is configured to allow for linear adjustment between components. The clip assembly 100 includes an attachment member 102 (for example, a clip) that is configured to detachingly couple to a rail member 104. It is intended that the rail member 104 is linearly-adjustable relative to the attachment member 102. That is, the rail member 104 is configured to be moved linearly (i.e. slidably) within the coupling with respect to the attachment member 102, allowing for high linear variation tolerance. That is, the linear adjustment includes linear variation tolerance.

The clip assembly 100 may include sealing features (not shown). Further, the clip assembly 100 may be formed through simple tooling and manufacturing processes. In at least one examples, the rail member 104 and/or the attachment member 102 may be integrally formed with a component part (not shown), instead of being separately attached to respective component part. In at least one example, the rail member 104 is coupled to a component, such as through an assembly process, an insert-molding process, or an integral molding and forming process. In general use, the attachment member 102 or rail member 104 is coupled to a component part. Then, the rail member 104 is mountingly mated to the attachment member 102 so as to secure respective component parts together.

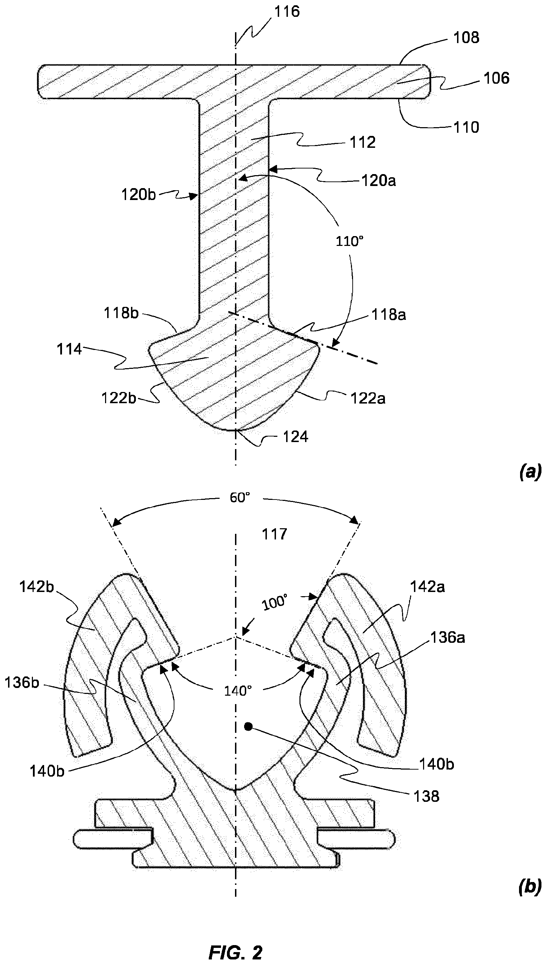

Figures 1(a), (b) illustrate a simplified example embodiment of the clip assembly 100 of the present invention (a) before and (b) after coupling. The rail member 104 comprises a base portion 106, having a first 108 and second surface 110, and a rail beam 112, extending outwardly from the second surface 110 of the base portion 106 along a longitudinal central axis 116 (see Figure 2(a)), preferably, in a substantially normal (i.e. perpendicular) direction to the second surface 110 of the base portion 106. A rail ledge 114 is provided at a distal end of the rail beam 112 having a substantially arrow-shaped cross-section.

In examples including a base portion, the rail beam 112 may extend from a centre portion of the second surface 110 of the base portion 106. That is, the base portion 106 may laterally extend on each side of the rail beam 112. The base portion 106 may therefore provide lateral protection to the rail beam 112.

Further, and with reference to Figures 2(a), the rail ledge 114 is formed of two shoulder portions 118a, 118b laterally extending from respective beam side walls 120a, 120b of the rail beam 112 and adjacent ledge side walls 122a, 122b converging to a distal tip portion 124 (i.e. apex). The distal tip portion or apex 124 is coaxial with the central axis 116 and may be filleted so as to form a rounded tip 124. Respective shoulder portions 118a and 118b are angled towards the distal tip at a predetermined angle relative to the central axis 116. The angle between the central axis 116 and respective shoulder portions 118a an 118b may be between 100° (degrees) and 135° (degrees). In a preferred embodiment, the angle between the central axis 116 and respective shoulder portions 118a and 118b may be about 110° (degrees). Further, ledge side walls 122a, 122b may have a convex curvature seamlessly merging with the rounded distal tip portion 124.

A component fastener (not shown) may extend outwardly from the first surface 108 of the base portion 106. The component fastener may be configured to securely couple the rail member 104 to a first component. For example, the component fastener may snapably secure into a suitable hole of the first component. The component fastener may include various other fastening interfaces. For example, the component fastener may include flexible arms, threaded interfaces, and/or the like that are configured to securely connect the rail member 104 to the first component.

As shown in Figures 1(a), (b), the attachment member 102 of the clip assembly 100 comprises a base portion 128, having a first 130 and second surface 132, and a coupling member 134 provided on the second surface 132 of the base portion 128.

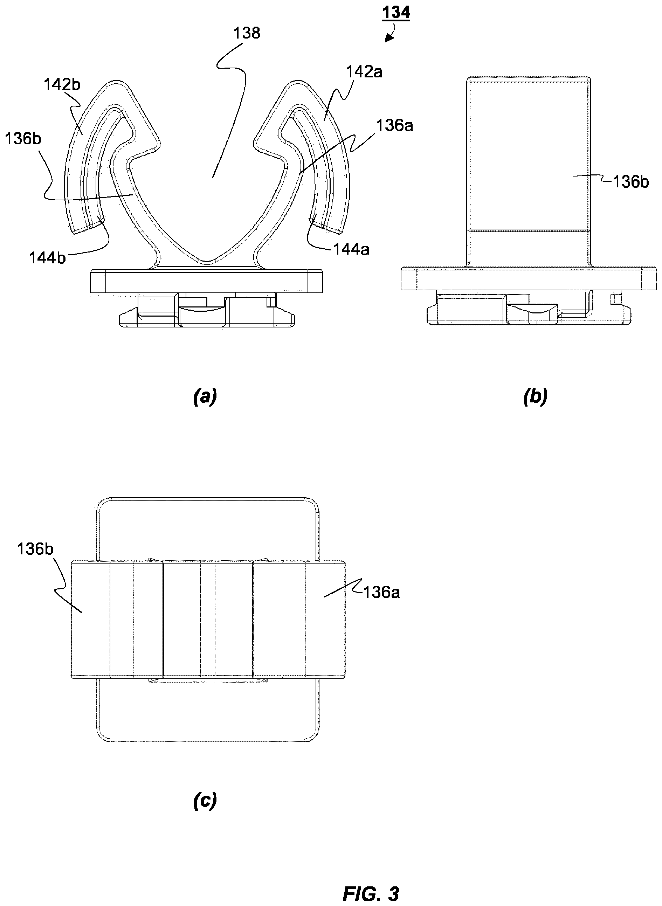

Referring now to Figures 2(b) and 3, the coupling member 134 comprises two opposed coupling brackets 136a, 136b extending outwardly from the second surface 132 of the base portion 128 of the attachment member 102. The two opposed coupling brackets 136a and 136b are arranged so as to form a substantially arrow-shaped gap portion 138 adapted to matingly engage with the rail ledge 114 of the rail member 104. In particular, the arrow-shaped gap portion 138 is formed complementary to the arrow-shaped cross-section of the rail ledge 114 having a central axis 117 and is configured to couplingly receive and slidably retain the rail ledge 114 of the rail member 102 during use.

The two opposed coupling brackets 136a and 136b further comprise respective inner shoulder portions 140a, 140b that are arranged at an obtuse angle with respect to each other (when in a non-deflected state). In an example embodiment, the angle between respective inner shoulder portions 140a and 140b is about 140° (degrees). End portions of the two opposed coupling brackets 136a and 136b are formed so as to provide an opening angled at about 60° (degrees), i.e. suitable to "funnel" (guide) the arrow-shaped rail ledge 114 into the arrow-shaped gap portion 138.

The two opposed coupling brackets 136a and 136b are elastically deflectable. That is, the coupling brackets 136a and 136b may be deformed to an extent and return to their original positioning. The extent may be the elastic limit of the coupling brackets 136a and 136b. The coupling brackets 136a and 136b may be resiliently biased back to its original position when deflected. For example, during coupling, the rail ledge 114 slides into the opening of the two opposed coupling brackets 136a and 136b and deflects the coupling brackets outwardly until the rail member 114 enters the arrow-shaped gap portion 138 when the two opposed coupling brackets spring back (snap back) to their original position "trapping" the rail ledge 114.

The perimeter of arrow-shaped gap portion 138 may be slightly larger than the perimeter of the arrow-shaped rail ledge 114.

Each one of the two opposed coupling brackets 136a and 136b of the attachment member 102 comprises a respective limiter member 142a, 142b extending laterally outwardly from the end portion of each one of the two opposed coupling brackets 136a and 136b and towards the base portion 128 of the attachment member 102. Each one of the limiter members 142a, 142b may be resiliently spaced apart from respective coupling bracket 136a, 136b and may be curved towards the central axis 117.

A strengthening rib 144a, 144b may be provided at an inner surface of each one of the limiter members 142a, 142b.

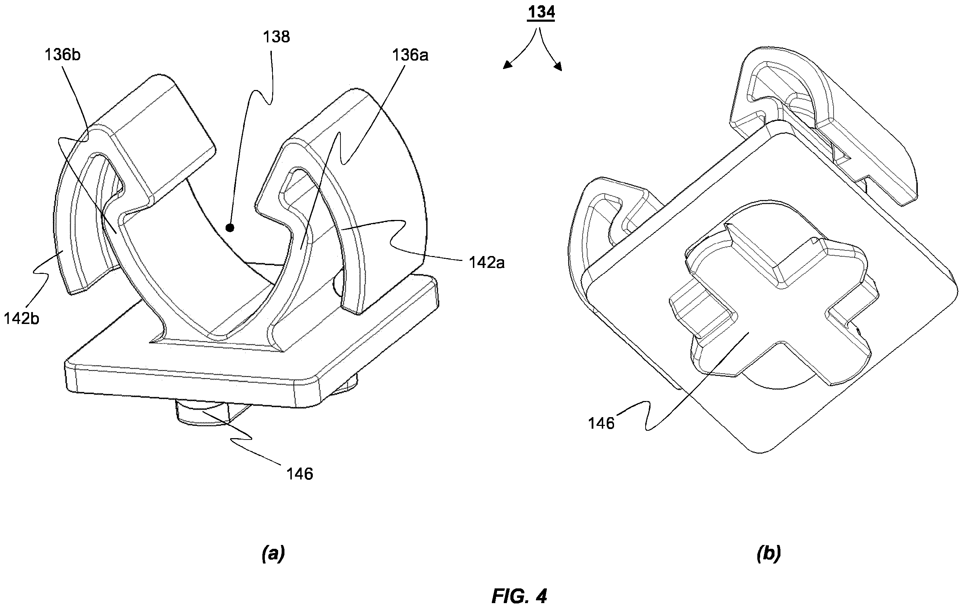

As particularly illustrated in Figures 4(a) and (b) the coupling member 134 may be demountably coupleable to the attachment member 102. For example, the coupling member 134 may be removably fastened to the base portion 128 of the attachment member 102. In one example embodiment, the coupling member 134 comprises a male connector portion 146 of a bayonet coupling, wherein the base portion 128 of the attachment member 102 comprises the respective female connector portion (not shown). The male connector portion may be provided at the base portion of the attachment member, in which case the female connector portion is provided at the coupling member 134. However, it is understood by the person skilled in the art that any other connector mechanism may be used to removably couple the coupling member 134 to the attachment member 102. For example, the mount between the coupling member 134 and the attachment member 102 may include flexible arms, threaded interfaces, and/or the like that are configured to securely connect the attachment member 102 to the second component.

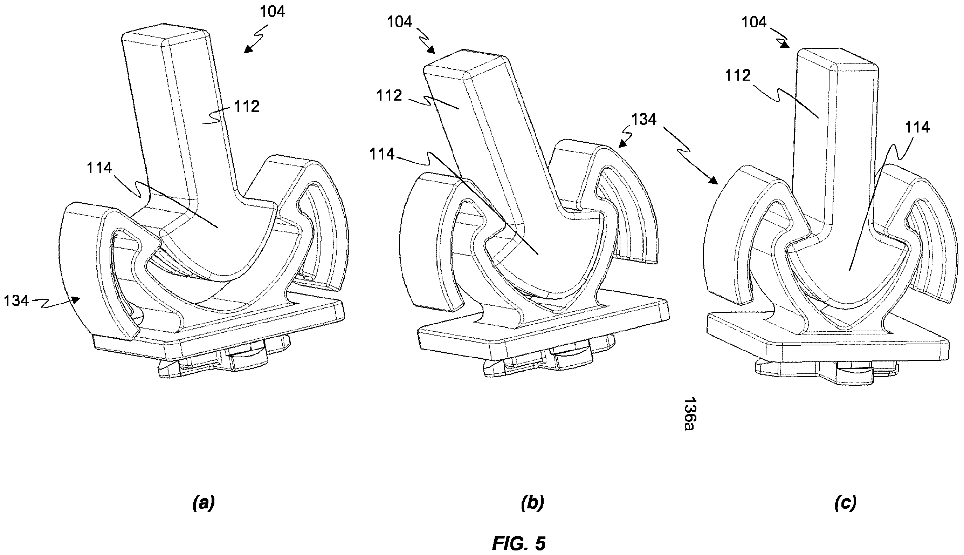

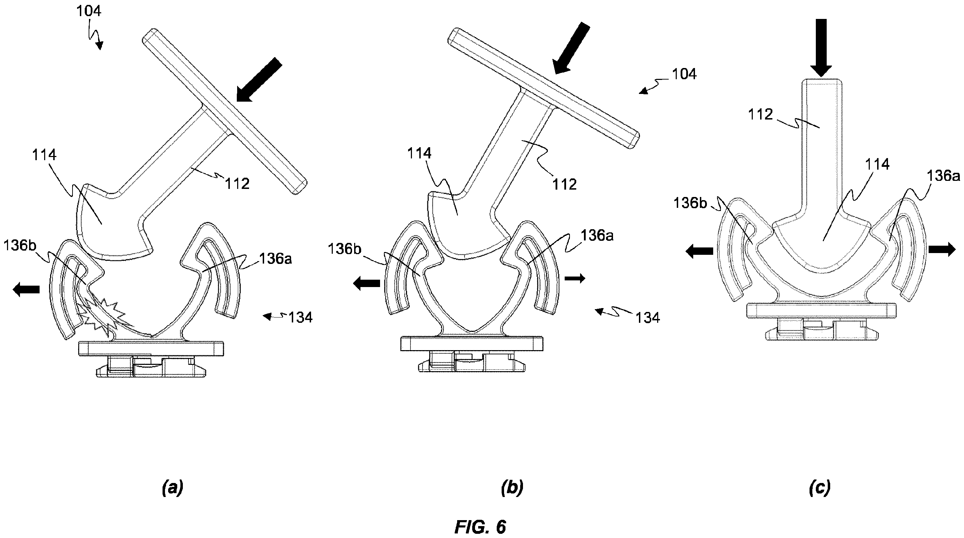

Figures 5 and 6 illustrate the essential components of the clip assembly 100 during use, i.e. the rail beam 112 and distal rail ledge 114, as well as, the coupling member 134 with the two opposed coupling brackets 136a and 136b.

During coupling, rail ledge 114 of the rail member 104 is pushed into the opening of the two opposed coupling brackets 136a and 136b deflecting the two opposed coupling brackets 136a and 136b so as to enter the arrow-shaped gap portion 138. The maximum deflection of the two opposed coupling brackets 136a and 136b is restricted by respective limiter members 142a, 142b that stoppingly engage with a base portion of the attachment member 102 (or coupling member 134 if demountably coupleable to the attachment member 102). The length of each one of the limiter members 142a, 142b determines the extend of deflection allowed by the two opposed coupling brackets 136a and 136b.

Figure 6(a) illustrates an extreme misalignment between the rail member 104 and the attachment member 102 when trying to insert the rail ledge 114 into the gap portion 138 of the two opposed coupling brackets 136a and 136b. In this particular case, the rail member 104 pushes against one of the two opposed coupling brackets 136a and 136b bending the coupling bracket 136b until the limiter member 142b stops the deflection before it potentially damages (e.g. break) the coupling bracket 136b. Figure 6(b) illustrates a coupling attempt where the rail member 104 and coupling member 134 are marginally misaligned, i.e. the centre axes 116, 117 of the rail member 104 and the coupling member 134 are not in line. Here, the opening surfaces of the two opposed coupling brackets 136a and 136b are angled so as to "funnel" the rail ledge 114 into the gap portion 138 bending open the two opposed coupling brackets 136a and 136b until the rail ledge 114 snaps into a coupling engagement with the coupling member 134. Figure 6(c) illustrates a coupling attempt where the rail member 104 and the coupling member 134 are centrally aligned. Here the rail ledge 114 simply deflects the two opposed coupling brackets 136a and 136b until the opening is wide enough to allow the rail ledge 114 to enter the arrow-shaped gap portion 138 of the coupling member 134 at which point the two resilient opposed coupling brackets 136a and 136b snap back into a coupling engagement with the rail member 104.

It is understood that the limiter members 142a and 142b are configured to restrict the deflection movement of respective coupling bracket(s) 136a and/or 136b so as to prevent damage to the two opposed coupling brackets 136a and 136b from overbending any one of the two opposed coupling brackets 136a and 136b. In addition, the resilient limiter members 142a and 142b are adapted to absorb and mitigate and accidental hits and bumps any one of the two opposed coupling brackets 136a and 136b, therefore, minimising potential damage to the coupling member 134.

Decoupling the clip assembly 100 is effectively the coupling process in reverse. The arrow-shaped cross section of the rail ledge 114 and the corresponding arrowed shaped cross section of the central gap portion 138 means that a larger force is required to pull the rail ledge 114 out of engagement with the central gap portion 138. In particular, the angle of corresponding shoulder portions 118a, 140a and 118b, 140b of the rail ledge 114 and the two opposed coupling brackets 136a, 136b relative to respective central axes 116, 117 is suitably chosen to require a significantly larger force to pull the rail ledge 114 out of coupling engagement with the coupling member 134. Preferably, the angle between shoulder portions 118a, 118b and the central axis 116 is approximately 110° (degrees), and the angle between the inner shoulder portions 140a, 140b and the central axis 117 is approximately 70° (degrees) However, it is understood by the person skilled in the art that any other suitable angle may be used. Changing the angle of the shoulder portions 118a, 118b, 140a, 140b may change the decoupling force required to pull the rail member 104 out of engagement with the coupling member 134.

In one example embodiment of the clip assembly 100, components are dimensioned, and material properties are chosen such that the required decoupling force (i.e. the force to pull the rail member 104 out of engagement with the coupling member 134) is approximately three times the coupling force required to push the rail member 104 into engagement with the coupling member 134.

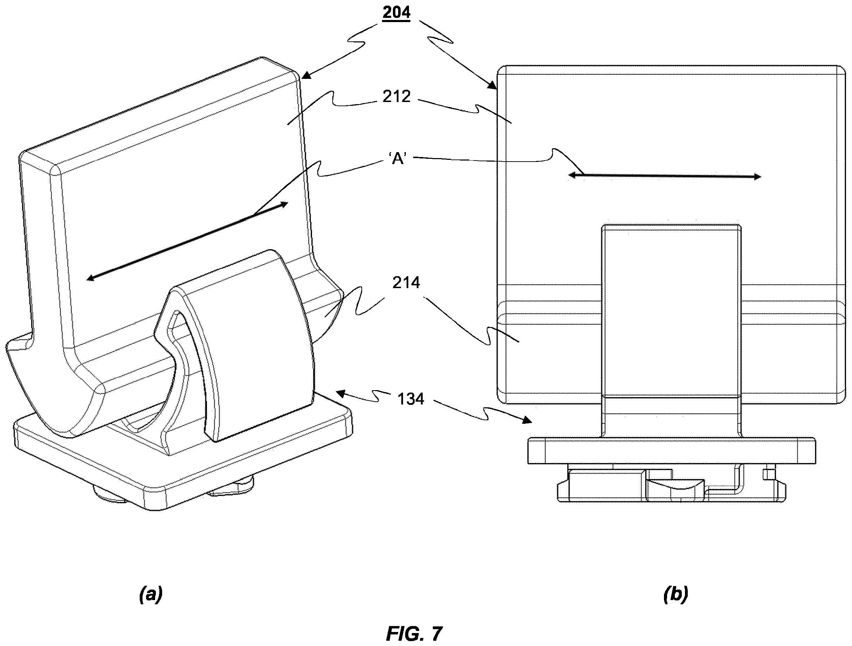

Figures 7(a) and (b) show an alternative embodiment of the rail member 114, i.e. a rail member 204 with an elongated rail beam 212 and rail ledge 214 linearly slidingly coupled to the coupling member 134 of the attachment member 102. The linear adjustability between the rail member 204 and the coupling member 134 is schematically illustrated by arrow 'A'. It is understood by the person skilled in the art, that the rail member 104, 204, as well as, the two opposed coupling brackets 136a and 136b, may be any suitable width.

It will be appreciated by persons skilled in the art that the above embodiment(s) have been described by way of example only and not in any limitative sense, and that various alterations and modifications are possible without departing from the scope of the invention as defined by the appended claims. Various modifications to the detailed designs as described above are possible. For example, although the shape of the rail beam 112 has been described has substantially rectangular in cross-section, any appropriate shape may be used. Further, although the attachment member 102 has been described as having two opposed coupling brackets 136a, 136b, other embodiments of the invention may have more than two opposed coupling brackets, i.e. a plurality of opposed coupling brackets may be provided in parallel along the base portion of the attachment member 102. Further, although, the rail member 104 and the attachment member 102 have been described as formed integrally with its constituent parts, the rail member 104 and the attachment member 102 may be formed of separate parts lockingly fitted together. For example, the rail beam 112 may be distinct from the rail ledge 114 and fixed together by any standard means. Further, although the above described clip assembly components have been described as symmetrical, in alternative examples, the components may be asymmetrical. For example, a first shoulder portion 118a, 140a may be positioned higher than a second shoulder portion 118b, 140b, such that the arrow-shaped cross section is skewed.

## Claims

1. A clip assembly (100) for adjustably coupling a first component and a second component, said clip assembly (100) comprising:
a rail member (104), configured to connect to the first component, comprising a rail beam (112) having a rail ledge (114) at a distal end portion, said rail ledge (114) having a substantially arrow-shaped cross-section; and
an attachment member (102), configured to connect to the second component, comprising at least two opposed elastically deflectable coupling brackets (136a,136b) provided at a base portion (128) and adapted to mountably receive and slidably retain said rail ledge (114) so as to allow linear movement of said rail member (104) relative to said attachment member (102) along a longitudinal axis (116) of said rail ledge (114), **characterised in that** said attachment member (102) further comprises a first and second limiter member (142a, 142b) extending laterally away from an end portion of respective one of said at least two opposed elastically deflectable coupling brackets (136a,136b) and towards said base portion (128).

2. A clip assembly (100) according to claim 1, wherein said at least two coupling brackets (136a, 136b) are spaced apart by a central gap portion (138).

3. A clip assembly (100) according to any one of the preceding claims, wherein said rail beam (112) comprises at least two end walls (120a, 120b) connected to respective ends of said rail ledge (114).

4. A clip assembly (100) according to claim 3, wherein said end walls comprise stop barriers configured to limit the linear movement of said rail member (104) relative to said attachment member (102).

5. A clip assembly (100) according to any one of the preceding claims, wherein said arrow-shaped cross section comprises a distal apex (124) at a centre axis (117) of said rail ledge (114), a first and second lateral side wall portion (122a,122b) extending from said distal apex (124) and a first and second shoulder portion (118a,118b) extending from respective one of said first and second side wall portion (122a, 122b) towards said centre axis (117) of said rail ledge (114).

6. A clip assembly (100) according to claim 5, wherein each one of said first and second side wall portion (122a, 122b) has a convex curvature.

7. A clip assembly (100) according to any one of claims 5 and 6, wherein the angle between said first and second shoulder portion (118a,118b) and said centre axis (117) of said rail ledge (114) is obtuse.

8. A clip assembly (100) according to claim 7, wherein the angle between said first and second shoulder portion (118a,118b) and said centre axis (117) of said rail ledge (114) is greater than 100 degrees.

9. A clip assembly (100) according to claim 8, wherein the angle between said first and second shoulder portion (118a,118b) and said centre axis (117) of said rail ledge (114) is equal to or greater than 110 degrees.

10. A clip assembly (100) according to any one of claims 2 to 9, wherein said central gap portion (138) is shaped operably complementary to said arrow-shaped cross section of said rail ledge (114).

11. A clip assembly (100) according to claim 1, wherein each one of said first and second limiter member (142a, 142b) is adapted to restrict lateral movement of respective one of said at least two opposed elastically deflectable coupling brackets (136a,136b).

12. A clip assembly (100) according to any one of the preceding claims, wherein each one of said first and second limiter member (142a, 142b) is configured to stoppingly engage with said base portion (128) of said attachment member (102).

13. A clip assembly (100) according to any one of the preceding claims, wherein each one of said first and second limiter member (142a, 142b) is resiliently spaced apart from said end portion of respective one of said at least two opposed elastically deflectable coupling brackets (136a,136b).

14. A clip assembly (100) according to any one of the preceding claims, wherein a decoupling force required to extract said rail ledge (114) out of engagement with said at least two opposed elastically deflectable coupling brackets (136a, 136b) is greater than a coupling force required to insert said rail ledge (114) into engagement with said at least two opposed elastically deflectable coupling brackets (136a,136b).

15. A clip assembly (100) according to claim 14, wherein said decoupling force is approximately three times said coupling force.

16. A clip assembly (100) according to any one of the preceding claims, wherein said at least two opposed elastically deflectable coupling brackets (136a,136b) are provided on a coupling member (134) that is demountably couplable with said attachment member (102).

17. A clip assembly (100) according to claim 16, wherein said coupling member (134) comprises one of a male or female portion and said attachment member (102) comprises respective other one of a male or female portion of a bayonet-type mount.

## Patentansprüche

1. Klammeranordnung (100) zum einstellbaren Koppeln einer ersten Komponente und einer zweiten Komponente, die Klammeranordnung (100) aufweisend:
ein Schienenelement (104), das dazu ausgebildet ist, sich mit der ersten Komponente zu verbinden, und das einen Schienenträger (112) mit einer Schienenleiste (114) an einem distalen Endabschnitt aufweist, wobei die Schienenleiste (114) einen im Wesentlichen pfeilförmigen Querschnitt aufweist; und
ein Befestigungselement (102), das dazu ausgebildet ist, sich mit der zweiten Komponente zu verbinden, und das zumindest zwei gegenüberliegende elastisch auslenkbare Kopplungsbügel (136a, 136b) aufweist, die an einem Basisabschnitt (128) vorgesehen sind und dazu ausgelegt sind, die Schienenleiste (114) montierbar aufzunehmen und verschiebbar zu halten, um eine lineare Bewegung des Schienenelements (104) relativ zu dem Befestigungselement (102) entlang einer Längsachse (116) der Schienenleiste (114) zu ermöglichen, **dadurch gekennzeichnet, dass** das Befestigungselement (102) ferner ein erstes und zweites Begrenzungselement (142a, 142b) aufweist, die sich seitlich von einem Endabschnitt des jeweiligen der zumindest zwei gegenüberliegenden elastisch auslenkbaren Kopplungsbügel (136a, 136b) weg und in Richtung des Basisabschnitts (128) erstrecken.

2. Klammeranordnung (100) nach Anspruch 1, wobei die zumindest zwei Kopplungsbügel (136a, 136b) durch einen zentralen Spaltabschnitt (138) voneinander beabstandet sind.

3. Klammeranordnung (100) nach einem der vorhergehenden Ansprüche, wobei der Schienenträger (112) zumindest zwei Stirnwände (120a, 120b) aufweist, die mit jeweiligen Enden der Schienenleiste (114) verbunden sind.

4. Klammeranordnung (100) nach Anspruch 3, wobei die Stirnwände Anschlagbarrieren aufweisen, die dazu ausgebildet sind, die lineare Bewegung des Schienenelements (104) relativ zu dem Befestigungselement (102) zu begrenzen.

5. Klammeranordnung (100) nach einem der vorhergehenden Ansprüche, wobei der pfeilförmige Querschnitt einen distalen Scheitelpunkt (124) an einer Mittelachse (117) der Schienenleiste (114), einen ersten und zweiten lateralen Seitenwandabschnitt (122a, 122b), die sich von dem distalen Scheitelpunkt (124) erstrecken, und einen ersten und zweiten Schulterabschnitt (118a, 118b), die sich von einem jeweiligen des ersten und zweiten Seitenwandabschnitts (122a, 122b) in Richtung der Mittelachse (117) der Schienenleiste (114) erstrecken, aufweist.

6. Klammeranordnung (100) nach Anspruch 5, wobei jeder von dem ersten und zweiten Seitenwandabschnitt (122a, 122b) eine konvexe Krümmung aufweist.

7. Klammeranordnung (100) nach einem der Ansprüche 5 und 6, wobei der Winkel zwischen dem ersten und zweiten Schulterabschnitt (118a, 118b) und der Mittelachse (117) der Schienenleiste (114) stumpf ist.

8. Klammeranordnung (100) nach Anspruch 7, wobei der Winkel zwischen dem ersten und zweiten Schulterabschnitt (118a, 118b) und der Mittelachse (117) der Schienenleiste (114) größer als 100 Grad ist.

9. Klammeranordnung (100) nach Anspruch 8, wobei der Winkel zwischen dem ersten und zweiten Schulterabschnitt (118a, 118b) und der Mittelachse (117) der Schienenleiste (114) gleich oder größer als 110 Grad ist.

10. Klammeranordnung (100) nach einem der Ansprüche 2 bis 9, wobei der zentrale Spaltabschnitt (138) funktionell komplementär zu dem pfeilförmigen Querschnitt der Schienenleiste (114) geformt ist.

11. Klammeranordnung (100) nach Anspruch 1, wobei jedes von dem ersten und zweiten Begrenzungselement (142a, 142b) ausgelegt ist, eine seitliche Bewegung eines jeweiligen der zumindest zwei gegenüberliegenden elastisch auslenkbaren Kopplungsbügel (136a, 136b) zu begrenzen.

12. Klammeranordnung (100) nach einem der vorhergehenden Ansprüche, wobei jedes von dem ersten und zweiten Begrenzungselement (142a, 142b) dazu ausgebildet ist, mit dem Basisabschnitt (128) des Befestigungselements (102) in Anschlageingriff zu treten.

13. Klammeranordnung (100) nach einem der vorhergehenden Ansprüche, wobei jedes von dem ersten und zweiten Begrenzungselement (142a, 142b) von dem Endabschnitt des jeweiligen der zumindest zwei gegenüberliegenden elastisch auslenkbaren Kopplungsbügel (136a, 136b) nachgiebig beabstandet ist.

14. Klammeranordnung (100) nach einem der vorhergehenden Ansprüche, wobei eine Entkoppelkraft, die erforderlich ist, um die Schienenleiste (114) aus dem Eingriff mit den zumindest zwei gegenüberliegenden elastisch auslenkbaren Kopplungsbügeln (136a, 136b) heraus zu befördern, größer ist als eine Koppelkraft, die erforderlich ist, um die Schienenleiste (114) in Eingriff mit den zumindest zwei gegenüberliegenden elastisch auslenkbaren Kopplungsbügeln (136a, 136b) zu führen.

15. Klammeranordnung (100) nach Anspruch 14, wobei die Entkoppelkraft etwa das Dreifache der Koppelkraft beträgt.

16. Klammeranordnung (100) nach einem der vorhergehenden Ansprüche, wobei die zumindest zwei gegenüberliegenden elastisch auslenkbaren Kopplungsbügel (136a, 136b) an einem Kopplungselement (134) vorgesehen sind, das abnehmbar mit dem Befestigungselement (102) koppelbar ist.

17. Klammeranordnung (100) nach Anspruch 16, wobei das Kopplungselement (134) einen von einem männlichen oder weiblichen Abschnitt aufweist und das Befestigungselement (102) einen jeweiligen anderen von einem männlichen oder weiblichen Abschnitt einer bajonettartigen Halterung aufweist.

## Revendications

1. Ensemble de clip (100) pour le couplage de manière réglable d'un premier composant et d'un deuxième composant, ledit ensemble de clip (100) comprenant :
un élément de rail (104), configuré pour se connecter au premier composant, comprenant une poutre de rail (112) ayant un rebord de rail (114) sur une partie d'extrémité distale, ledit rebord de rail (114) ayant une section transversale sensiblement en forme de flèche ; et
un élément de fixation (102), configuré pour se connecter au deuxième composant, comprenant au moins deux supports de couplage élastiquement déformables opposés (136a, 136b) fournis sur une partie de base (128) et adaptés pour recevoir et retenir de manière coulissante ledit rebord de rail (114) de manière à permettre un mouvement linéaire dudit élément de rail (104) par rapport audit élément de fixation (102) le long d'un axe longitudinal (116) dudit rebord de rail (114), **caractérisé en ce que** ledit élément de fixation (102) comprend en outre un premier et un deuxième éléments limiteurs (142a, 142b) s'étendant latéralement à l'écart d'une partie d'extrémité d'un respectif parmi lesdits au moins deux supports de couplage élastiquement déformables opposés (136a, 136b) et vers ladite partie de base (128) .

2. Ensemble de clip (100) selon la revendication 1, dans lequel lesdits au moins deux supports de couplage (136a, 136b) sont espacés par une partie d'espace centrale (138).

3. Ensemble de clip (100) selon l'une quelconque des revendications précédentes, dans lequel ladite poutre de rail (112) comprend au moins deux parois d'extrémité (120a, 120b) reliées aux extrémités respectives dudit rebord de rail (114).

4. Ensemble de clip (100) selon la revendication 3, dans lequel lesdites parois d'extrémité comprennent des barrières d'arrêt configurées pour limiter le mouvement linéaire dudit élément de rail (104) par rapport audit élément de fixation (102).

5. Ensemble de clip (100) selon l'une quelconque des revendications précédentes, dans lequel ladite section transversale en forme de flèche comprend un sommet distal (124) sur un axe central (117) dudit rebord de rail (114), une première et une deuxième partie de paroi latérale (122a, 122b) s'étendant à partir dudit sommet distal de rail (124) et une première et une deuxième partie d'épaulement (118a, 118b) s'étendant à partir d'une respective parmi lesdites première et deuxième parties de paroi latérale (122a, 122b) vers ledit axe central (117) dudit rebord de rail (114).

6. Ensemble de clip (100) selon la revendication 5, dans lequel chacune parmi lesdites première et deuxième parties de paroi latérale (122a, 122b) a une courbure convexe.

7. Ensemble de clip (100) selon l'une quelconque des revendications 5 et 6, dans lequel l'angle entre lesdites première et deuxième parties d'épaulement (118a, 118b) et ledit axe central (117) dudit rebord de rail (114) est obtus.

8. Ensemble de clip (100) selon la revendication 7, dans lequel l'angle entre lesdites première et deuxième parties d'épaulement (118a, 118b) et ledit axe central (117) dudit rebord de rail (114) est supérieur à 100 degrés.

9. Ensemble de clip (100) selon la revendication 8, dans lequel l'angle entre lesdites première et deuxième parties d'épaulement (118a, 118b) et ledit axe central (117) dudit rebord de rail (114) est égal ou supérieur à 110 degrés.

10. Ensemble de clip (100) selon l'une quelconque des revendications 2 à 9, dans lequel ladite partie d'espace centrale (138) est formée de manière à être fonctionnellement complémentaire à ladite section transversale en forme de flèche dudit rebord de rail (114).

11. Ensemble de clip (100) selon la revendication 1, dans lequel chacun parmi lesdits premier et deuxième éléments limiteurs (142a, 142b) est adapté pour limiter le mouvement latéral d'un respectif parmi lesdits au moins deux supports de couplage élastiquement déformables opposés (136a, 136b).

12. Ensemble de clip (100) selon l'une quelconque des revendications précédentes, dans lequel chacun parmi lesdits premier et deuxième éléments limiteurs (142a, 142b) est configuré pour s'engager de manière arrêtée avec ladite partie de base (128) dudit élément de fixation (102).

13. Ensemble de clip (100) selon l'une quelconque des revendications précédentes, dans lequel chacun parmi lesdits premier et deuxième éléments limiteurs (142a, 142b) est espacé de manière élastique de ladite partie d'extrémité d'un respectif parmi lesdits au moins deux supports de couplage élastiquement déformables opposés (136a, 136b).

14. Ensemble de clip (100) selon l'une quelconque des revendications précédentes, dans lequel une force de découplage requise pour extraire ledit rebord de rail (114) hors de l'engagement avec lesdits au moins deux supports de couplage élastiquement déformables opposés (136a, 136b) est supérieure à une force de couplage requise pour insérer ledit rebord de rail (114) en engagement avec lesdits au moins deux supports de couplage élastiquement déformables opposés (136a, 136b).

15. Ensemble de clip (100) selon la revendication 14, dans lequel ladite force de découplage est approximativement trois fois ladite force de couplage.

16. Ensemble de clip (100) selon l'une quelconque des revendications précédentes, dans lequel lesdits au moins deux supports de couplage élastiquement déformables opposés (136a, 136b) sont fournis sur un élément de couplage (134) qui peut être couplé de manière démontable avec ledit élément de fixation (102).

17. Ensemble de clip (100) selon la revendication 16, dans lequel ledit élément de couplage (134) comprend une parmi une partie mâle ou femelle et ledit élément de fixation (102) comprend une autre respective parmi une partie mâle ou femelle d'un montage de type à baïonnette.
